# EUROPÄISCHE PATENTANMELDUNG

(11) **EP 4 793 778 A1**
(43) Veröffentlichungstag der Anmeldung: **19.08.2026**
(21) Anmeldenummer: 25158181.5
(22) Anmeldetag: 17.02.2025
(51) Int. Cl.: G06F 11/3668, G06F 11/3698, G06F 8/33

(54) **AUTOMATISERTES TESTEN VON FAHRFUNKTION DES KRAFTFAHRZEUGS DURCH VIRTUELLE TESTS**

(71) Anmelder: dSPACE SE & Co. KG, 33102 Paderborn (DE)
(72) Erfinder: Misch, Thomas, 33102 Paderborn (DE); Schürmeyer, Johannes, 33102 Paderborn (DE)

(57) **Zusammenfassung**

Die vorliegende Erfindung betrifft ein computerimplementiertes Verfahren und System zum Betreiben eines Testsystems (1) zum Testen und/oder Validieren einer automatisierten Steuerungsfunktion eines Fahrzeugs oder eines mit dem Fahrzeug verbundenen Geräts, mit den Schritten: Bereitstellen eines, insbesondere externen, Datenspeichers (10), in welchem eine Anzahl von Testkonfigurationen (12.1, 12.2) eines virtuellen Tests (14.1a, 14.1b, 14.2a, 14.2b) zum Testen und/oder Validieren der automatisierten Steuerungsfunktion des Fahrzeugs oder des mit dem Fahrzeug verbundenen Geräts speicherbar ist; und Überwachen des Datenspeichers (10) durch einen Dienst (16), welcher bei Detektieren einer Erstellung, Änderung oder Löschung zumindest einer Testkonfiguration (12.1, 12.2) in dem Datenspeicher (10) eine Erstellung, Änderung oder Löschung des, der in dem Datenspeicher (10) gespeicherten Testkonfiguration (12.1, 12.2) entsprechenden virtuellen Tests (14.1a, 14.1b, 14.2a, 14.2b) zum Testen und/oder Validieren der automatisierten Steuerungsfunktion des Fahrzeugs oder des mit dem Fahrzeug verbundenen Geräts in dem Testsystem (1) durchführt.

## Beschreibung

Die Erfindung betrifft ein computerimplementiertes Verfahren zum Betreiben eines Testsystems zum Testen und/oder Validieren einer automatisierten Steuerungsfunktion eines Fahrzeugs oder eines mit dem Fahrzeug verbundenen Geräts.

Die Erfindung betrifft des Weiteren ein Testsystem zum Testen und/oder Validieren einer automatisierten Steuerungsfunktion eines Fahrzeugs oder eines mit dem Fahrzeug verbundenen Geräts.

Die Erfindung betrifft ferner ein Computerprogrammprodukt mit einem Computerprogramm sowie einen computerlesbaren Datenträger mit Programmcode eines Computerprogramms.

### Stand der Technik

Moderne Fahrzeuge sind zunehmend mit automatisierten Steuerungsfunktionen ausgestattet, die ein breites Spektrum an Fahrfunktionen von einfachen Fahrerassistenzsystemen bis hin zu vollständig autonomen Fahrfunktionen umfassen. Die Validierung dieser Systeme erfordert umfangreiche Tests in virtuellen Umgebungen, um sicherzustellen, dass die Steuerungsfunktionen erwartungsgemäß auf eine Vielzahl von Verkehrssituationen reagieren. Hierfür werden häufig Simulationsplattformen genutzt, die cloudbasierte Testsysteme zur Verfügung stellen.

Der Stand der Technik umfasst Simulationsumgebungen, die es Entwicklern ermöglichen, automatisierte Fahrfunktionen in virtuellen Testszenarien zu validieren. In diesen Umgebungen werden Verkehrsszenarien simuliert, um das Verhalten der Steuerungsfunktion zu analysieren. Die Testergebnisse werden anschließend mit Soll-Vorgaben verglichen, um Abweichungen und potenzielle Fehler zu identifizieren. Eine Herausforderung in diesem Bereich besteht darin, die Tests in hoher Anzahl und parallel durchzuführen, um die Vielzahl an möglichen Verkehrssituationen und unterschiedlichen Fahrzeugmodellen abzudecken.

In herkömmlichen Systemen müssen Projekte zur Durchführung von Tests manuell erstellt werden. Die Projektkonfigurationen und die Testdaten werden in Gitbasierten Repositories verwaltet. Entwickler legen Branches an, um neue Features zu implementieren und diese in verschiedenen Testprojekten zu validieren.

Dabei erfordert jeder neue Branch in der Regel ein manuelles Anlegen eines Projekts in der Testumgebung, oft über grafische Benutzeroberflächen oder REST APIs.

Diese manuelle Vorgehensweise weist mehrere Nachteile auf. Zum einen erfordert das Anlegen, Aktualisieren und Löschen von Projekten in der Testumgebung häufige manuelle Eingriffe, was fehleranfällig ist und die Entwicklungsgeschwindigkeit beeinträchtigt.

Zum anderen müssen Änderungen am Code-Stand manuell in der Testumgebung synchronisiert sowie ferner Rechte zum Anlegen und Verwalten von Projekten oft an eine große Anzahl von Entwicklern vergeben werden, was Sicherheits- und Verwaltungsprobleme mit sich bringt.

Es ist daher Aufgabe der Erfindung, ein verbessertes Verfahren zum Betreiben eines Testsystems zum Testen und/oder Validieren einer automatisierten Steuerungsfunktion eines Fahrzeugs oder eines mit dem Fahrzeug verbundenen Geräts sowie ein hierzu analoges Testsystem anzugeben, welches die vorstehend genannten Nachteile vermeidet.

### Offenbarung der Erfindung

Die Aufgabe wird durch ein computerimplementiertes Verfahren zum Betreiben eines Testsystems zum Testen und/oder Validieren einer automatisierten Steuerungsfunktion eines Fahrzeugs oder eines mit dem Fahrzeug verbundenen Geräts mit den Merkmalen des Patentanspruchs 1 gelöst.

Die Aufgabe wird des Weiteren durch ein System zum Testen und/oder Validieren einer automatisierten Steuerungsfunktion eines Fahrzeugs oder eines mit dem Fahrzeug verbundenen Geräts mit den Merkmalen des Patentanspruchs 13 gelöst.

Die Aufgabe wird ferner gelöst durch ein Computerprogrammprodukt mit einem Computerprogramm gemäß Anspruch 14 sowie durch einen computerlesbaren Datenträger mit Programmcode eines Computerprogramms gemäß Anspruch 15.

Die Erfindung betrifft ein computer-implementiertes Verfahren zum Betreiben eines Testsystems zum Testen und/oder Validieren einer automatisierten Steuerungsfunktion eines Fahrzeugs oder eines mit dem Fahrzeug verbundenen Geräts.

Das Verfahren umfasst ein Bereitstellen eines, insbesondere externen, Datenspeichers, in welchem eine Anzahl von Testkonfigurationen eines virtuellen Tests zum Testen und/oder Validieren der automatisierten Steuerungsfunktion des Fahrzeugs oder des mit dem Fahrzeug verbundenen Geräts speicherbar ist.

Des Weiteren umfasst das Verfahren ein Überwachen des Datenspeichers durch einen Dienst, welcher bei Detektieren einer Erstellung, Änderung oder Löschung zumindest einer Testkonfiguration in dem Datenspeicher eine Erstellung, Änderung oder Löschung des, der in dem Datenspeicher gespeicherten Testkonfiguration entsprechenden virtuellen Tests zum Testen und/oder Validieren der automatisierten Steuerungsfunktion des Fahrzeugs oder des mit dem Fahrzeug verbundenen Geräts in dem Testsystem durchführt.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Die Erfindung betrifft des Weiteren ein Testsystem zum Testen und/oder Validieren einer automatisierten Steuerungsfunktion eines Fahrzeugs oder eines mit dem Fahrzeug verbundenen Geräts.

Das Testsystem umfasst einen, insbesondere externen, Datenspeicher, in welchem eine Anzahl von Testkonfigurationen eines virtuellen Tests zum Testen und/oder Validieren der automatisierten Steuerungsfunktion des Fahrzeugs oder des mit dem Fahrzeug verbundenen Geräts speicherbar ist.

Darüber hinaus umfasst das Testsystem eine Überwachungseinrichtung, welche konfiguriert ist, durch einen Dienst den Datenspeicher zu überwachen, wobei der Dienst bei Detektieren einer Erstellung, Änderung oder Löschung zumindest einer Testkonfiguration in dem Datenspeicher konfiguriert ist, eine Erstellung, Änderung oder Löschung des virtuellen Tests zum Testen und/oder Validieren der automatisierten Steuerungsfunktion des Fahrzeugs oder des mit dem Fahrzeug verbundenen Geräts in dem Testsystem durchzuführen. Das mit dem Fahrzeug verbundene Gerät kann beispielsweise eine landwirtschaftliche Vorrichtung sein.

Eine Testkonfiguration ist ein strukturierter Datensatz oder eine Datei, die alle notwendigen Informationen zur Planung und Durchführung eines Tests in einem Testsystem enthält. Sie legt fest, welche Tests ausgeführt werden sollen, welche Parameter und Bedingungen dabei gelten, und welche Anforderungen überprüft oder validiert werden müssen.

Eine Testkonfiguration kann zudem detaillierte Szenarien für die zu testenden Funktionen oder Systeme enthalten, beispielsweise simulierte Verkehrssituationen für die Validierung automatisierter Steuerungsfunktionen eines Fahrzeugs. Zusätzlich sind in der Testkonfiguration Metadaten hinterlegt, wie etwa die Speicherorte der Konfigurationsdateien, Authentifizierungsdaten für den Zugriff, Versionsangaben sowie Identifikatoren für Entwicklungszweige bzw. Branches.

Durch die präzise Festlegung dieser Informationen ermöglicht die Testkonfiguration die automatische Erstellung, Anpassung und Löschung von virtuellen Tests, was zu einer effizienteren Durchführung von Validierungsprozessen führt und die Konsistenz zwischen Entwicklungs- und Testumgebungen sicherstellt.

Der virtuelle Test wird im Testsystem ausgeführt. Das Testsystem ist konfiguriert, um die automatisierte Steuerungsfunktion eines Fahrzeugs oder eines mit dem Fahrzeug verbundenen Geräts zu testen und zu validieren. Es stellt die notwendige Umgebung bereit, in der die virtuellen Tests basierend auf den gespeicherten Testkonfigurationen durchgeführt werden können.

Die Erfindung sieht somit ein automatisiertes Verfahren zur Verwaltung von Testkonfigurationen durch den Einsatz eines speziellen Dienstes vor. Der Dienst überwacht dabei kontinuierlich den Datenspeicher, insbesondere Git-Repositories und reagiert auf Änderungen wie z.B. die Erstellung neuer Branches, das Aktualisieren bestehender Testkonfigurationen oder das Löschen veralteter Branches.

Die Synchronisation stellt sicher, dass Änderungen am Quellcode sofort in den Testprojekten reflektiert werden, was die Fehlerwahrscheinlichkeit reduziert, die durch veraltete Teststände oder inkonsistente Konfigurationen entstehen könnte.

Somit können Synchronisationsfehler zwischen Entwicklungs- und Testsystemen vermieden werden, wodurch die Qualität der Tests und die Zuverlässigkeit der Ergebnisse gesteigert werden.

Ein weiterer Aspekt der Erfindung ist die automatisierte Löschung von nicht mehr benötigten Testprojekten, wenn die entsprechenden Branches im Git-Repository entfernt werden. Dies ermöglicht eine effiziente Nutzung der Systemressourcen in Cloud-Umgebungen, da überflüssige Testprojekte, die Speicherplatz und Rechenkapazität beanspruchen würden, automatisch gelöscht werden.

Somit kann eine Reduzierung des Speicherbedarfs und der Rechenlast in der Cloud-Infrastruktur bewirkt werden, was zu einer besseren Skalierbarkeit und Kosteneffizienz führt.

Ein Testsystem zum Testen und/oder Validieren einer automatisierten Steuerungsfunktion eines Fahrzeugs oder eines mit dem Fahrzeug verbundenen Geräts ist eine technische Einrichtung oder Software-Umgebung, die speziell entwickelt wurde, um automatisierte Steuerungsfunktionen zu prüfen und zu bewerten. Hierbei handelt es sich um Funktionen, die ohne direkte Eingaben des Fahrers agieren und das Verhalten des Fahrzeugs beeinflussen, beispielsweise in Form von Fahrassistenzsystemen, autonomer Steuerung oder vernetzten Funktionen mit externen Geräten.

Das System wird verwendet, um automatisierte Funktionen zu testen, wie z.B. Notbremsassistenten, Spurhalteassistenten, adaptive Geschwindigkeitsregelungen oder autonome Fahrfunktionen. Ziel ist es, sicherzustellen, dass diese Funktionen den Anforderungen in Bezug auf Sicherheit, Zuverlässigkeit und Leistung entsprechen.

Neben dem Testen wird auch die Validierung durchgeführt, d.h., es wird überprüft, ob die implementierte Funktion die gewünschten Anforderungen und den vorgesehenen Nutzen erfüllt.

Der Dienst zur Überwachung des Datenspeichers ist eine softwarebasierte Komponente innerhalb eines Testsystems, die kontinuierlich die Vorgänge im Datenspeicher überwacht, in dem Testkonfigurationen für automatisierte Tests der Steuerungsfunktionen eines Fahrzeugs oder eines mit dem Fahrzeug verbundenen Geräts gespeichert werden.

Der Dienst hat die Aufgabe, bei Änderungen an Testkonfigurationen automatisch entsprechende Anpassungen der virtuellen Tests vorzunehmen.

Der Dienst beobachtet dabei kontinuierlich den Datenspeicher, in dem Testkonfigurationen abgelegt sind. Die Überwachung kann durch ein Ereignis-basiertes Modell oder durch periodisches Scannen des Datenspeichers realisiert werden.

Der Dienst erkennt, wenn eine Testkonfiguration erstellt, geändert oder gelöscht wird. Eine Testkonfiguration ist ein Datensatz oder eine Datei, die Informationen darüber enthält, welche Tests ausgeführt werden sollen, mit welchen Parametern, Szenarien und Anforderungen.

Basierend auf den erkannten Änderungen im Datenspeicher passt der Dienst automatisch die entsprechenden virtuellen Tests im Testsystem an. Wenn eine neue Testkonfiguration erstellt wird, wird ein neuer virtueller Test angelegt. Wenn eine bestehende Testkonfiguration geändert wird, wird der entsprechende virtuelle Test angepasst und wenn eine Testkonfiguration gelöscht wird, entfernt der Dienst den zugehörigen virtuellen Test aus dem Testsystem.

Der Dienst ist dabei nahtlos in das Testsystem integriert und stellt sicher, dass die Änderungen in der Testkonfiguration sofort berücksichtigt werden. Dies ermöglicht eine hohe Dynamik und Flexibilität in der Testumgebung, da Tests in Echtzeit angepasst werden können, ohne manuelle Eingriffe.

Der Dienst sorgt somit für Konsistenz zwischen den im Datenspeicher hinterlegten Testkonfigurationen und den tatsächlich ausgeführten virtuellen Tests. Er stellt sicher, dass alle Änderungen sofort und korrekt in die Testausführung übernommen werden, um fehlerhafte oder veraltete Tests zu vermeiden.

Somit können manuelle Eingriffe minimiert und die Effizienz des Testprozesses erhöht werden. Ferner erlaubt das Verfahren schnelle Anpassungen und Änderungen, was in agilen Entwicklungsprozessen von Vorteil ist. Die schnelle Erkennung und automatische Anpassung reduziert überdies Verzögerungen bei der Testdurchführung.

In einem weiteren Aspekt wird vorgeschlagen, dass der Dienst Teil des Testsystems zum Testen und/oder Validieren der automatisierten Fahrfunktion des Kraftfahrzeugs ist.

Die Integration des Dienstes als Teil des Testsystems ermöglicht eine nahtlose Kommunikation zwischen den Komponenten des Systems, ohne dass externe Schnittstellen benötigt werden. Dies führt zu einer höheren Zuverlässigkeit und verringert die Latenzzeiten bei der Aktualisierung und Synchronisation der Testkonfigurationen.

In einem weiteren Aspekt wird vorgeschlagen, dass der Dienst für jeden virtuellen Test die Testkonfiguration beschreibende Metadaten aufweist.

Metadaten einer Testkonfiguration in einem Testsystem für automatisierte Steuerungsfunktionen umfassen die URL des Datenspeichers, die den Speicherort der Konfiguration angibt, und den Verzeichnispfad, der den genauen Speicherort beschreibt. Der Branch-Identifikator bezeichnet den zugehörigen Branch im Versionskontrollsystem, während Authentifizierungsdaten den sicheren Zugriff ermöglichen. Eine Versionsangabe ermöglicht die Nachverfolgung von Änderungen, und eine kurze Beschreibung liefert Kontext zum Zweck oder Inhalt der Konfiguration. Metadaten erleichtern somit die Verwaltung, Automatisierung und Konsistenz der Tests im System.

Die Verwendung von Metadaten für jeden virtuellen Test ermöglicht eine strukturierte Verwaltung der Testkonfigurationen. Durch die klare Beschreibung der Testparameter können die Testkonfigurationen effizienter abgerufen und verarbeitet werden. Dies verbessert die Konsistenz und Nachvollziehbarkeit der Tests.

In einem weiteren Aspekt wird vorgeschlagen, dass die Metadaten eine URL des Datenspeichers, einen Verzeichnispfad der Testkonfiguration und Authentifizierungsdaten eines Erstellers der Testkonfiguration aufweist.

Das Speichern der URL, des Verzeichnispfads und der Authentifizierungsdaten als Teil der Metadaten ermöglicht einen sicheren und direkten Zugriff auf die Testkonfigurationen. Dies minimiert die Wahrscheinlichkeit von Zugriffsfehlern und stellt sicher, dass die richtige Testkonfiguration geladen wird, ohne dass zusätzliche manuelle Eingaben erforderlich sind.

In einem weiteren Aspekt wird vorgeschlagen, dass die Metadaten zumindest einen, einen Branch der Testkonfiguration bezeichnenden Identifikator aufweisen.

Ein Branch ist eine isolierte Entwicklungslinie in einem Versionskontrollsystem. Er ermöglicht es, Änderungen am Quellcode parallel zur Hauptentwicklung durchzuführen, ohne diese Änderungen sofort in den Hauptentwicklungsstrang (z.B. den main oder master Branch) zu integrieren.

Ein Branch ermöglicht die gleichzeitige Bearbeitung von Features, Bugfixes oder Experimenten, ohne den Hauptcode zu beeinträchtigen. Änderungen in einem Branch sind isoliert, bis sie aktiv mit anderen Branches zusammengeführt werden (z.B. durch einen Merge oder Pull-Request). Jeder Branch hat seine eigene Historie, die es ermöglicht, den Entwicklungsverlauf nachzuvollziehen.

Ein Branch-Identifikator ist ein eindeutiger Bezeichner, der verwendet wird, um einen bestimmten Branch oder eine Gruppe von Branches im Versionskontrollsystem zu identifizieren. Der Branch-Identifikator kann entweder der vollständige Name des Branches oder ein Muster sein, das mehrere Branches beschreibt.

Der Branch-Identifikator muss den Branch eindeutig identifizieren können. Branch-Identifikatoren können Platzhalter enthalten, um mehrere Branches mit ähnlichen Namen zu beschreiben (z.B. feat/*). Der Branch-Identifikator wird in automatisierten Prozessen verwendet, um zu bestimmen, welche Branches überwacht, getestet oder weiterverarbeitet werden sollen.

Der Branch-Identifikator in den Metadaten ermöglicht eine präzise Zuordnung der Testkonfigurationen zu den entsprechenden Branches im Datenspeicher. Dadurch wird sichergestellt, dass die Tests immer mit dem korrekten Entwicklungsstand ausgeführt werden, was die Konsistenz zwischen Entwicklung und Test erhöht.

In einem weiteren Aspekt wird vorgeschlagen, dass der zumindest eine Identifikator, insbesondere unter Verwendung eines Platzhalters, eine Mehrzahl von Branches der Testkonfiguration bezeichnet.

Die Verwendung von Platzhaltern zur Kennzeichnung von Branch-Identifikatoren ermöglicht eine dynamische und flexible Verwaltung von Branches, die für die Erstellung von Testprojekten relevant sind. Dies reduziert den Aufwand für die Konfiguration und erlaubt eine automatisierte Skalierung der Tests bei neuen Branches.

In einem weiteren Aspekt wird vorgeschlagen, dass der Dienst unter Verwendung des zumindest einen Identifikators die zu überwachende Testkonfiguration selektiert, wobei basierend auf dem zumindest einen Identifikator festgelegt ist, für welche Branches der Testkonfiguration der virtuelle Test erstellt, geändert oder gelöscht wird.

Der Dienst kann somit basierend auf dem Branch-Identifikator gezielt die zu überwachenden Testkonfigurationen selektieren, wodurch eine verbesserte Überwachung und Verwaltung der Testprojekte ermöglicht wird. Dies führt zu einer effizienteren Ressourcennutzung, da nur die relevanten Konfigurationen überwacht werden.

In einem weiteren Aspekt wird vorgeschlagen, dass wenn im Datenspeicher ein neuer Branch der Testkonfiguration bereitgestellt wird, welcher dem Identifikator entspricht, ein dem Branch der Testkonfiguration entsprechender virtueller Test im Testsystem erstellt wird.

Das automatische Erstellen eines virtuellen Tests, wenn ein neuer Branch erkannt wird, gewährleistet, dass jede neue Funktion oder Änderung sofort getestet wird, ohne dass zusätzliche manuelle Schritte erforderlich sind. Dies minimiert die Latenzzeit zwischen Code-Änderungen und deren Validierung.

In einem weiteren Aspekt wird vorgeschlagen, dass wenn im Datenspeicher ein Branch der Testkonfiguration geändert wird, welcher dem Identifikator entspricht, ein dem Branch der Testkonfiguration entsprechender virtueller Test im Testsystem geändert wird.

Das Verfahren erkennt Änderungen an einem Branch und aktualisiert automatisch den entsprechenden virtuellen Test. Dies stellt sicher, dass die Testkonfigurationen immer dem aktuellen Entwicklungsstand entsprechen, was Inkonsistenzen zwischen Code und Tests vermeidet.

In einem weiteren Aspekt wird vorgeschlagen, dass wenn im Datenspeicher ein Branch der Testkonfiguration gelöscht wird, welcher dem Identifikator entspricht, ein dem Branch der Testkonfiguration entsprechender virtueller Test im Testsystem gelöscht wird.

Das automatische Löschen eines virtuellen Tests, wenn der entsprechende Branch im Git-Repository bzw. Datenspeicher gelöscht wird, verhindert die Ansammlung veralteter und unnötiger Testprojekte. Dies optimiert die Ressourcennutzung und vermeidet Speicher- und Rechenkapazitätsverschwendung.

In einem weiteren Aspekt wird vorgeschlagen, dass im Falle eines Pull-Requests an den Datenspeicher zum Zusammenführen von Änderungen von einem ersten Branch der Testkonfiguration in einen zweiten Branch der Testkonfiguration eine Änderung des dem zweiten Branch der Testkonfiguration entsprechenden virtuellen Test im Testsystem durchgeführt wird.

Ein Pull-Request ist eine Funktion in Versionskontrollsystemen, die es Entwicklern ermöglicht, Änderungen in einem Branch zur Überprüfung und Integration in einen anderen Branch vorzuschlagen. Pull-Requests sind Bestandteil der kollaborativen Softwareentwicklung, da sie den Prozess der Code-Überprüfung und die Integration neuer Änderungen in den Hauptentwicklungsstrang erleichtern.

Das Verfahren erkennt Pull-Requests und führt automatisch eine Aktualisierung des Testprojekts durch, wenn Änderungen von einem Entwicklungs-Branch in einen Implementierungs-Branch zusammengeführt werden. Dadurch wird der Hauptbranch stets auf dem neuesten Stand der Tests gehalten, was die Qualitätssicherung erhöht.

In einem weiteren Aspekt wird vorgeschlagen, dass der erste Branch der Testkonfiguration ein Entwicklungs-Branch und der zweite Branch der Testkonfiguration ein Implementierungs-Branch der Testkonfiguration ist.

Die Unterscheidung zwischen Entwicklungs-Branches und Implementierungs-Branches ermöglicht eine differenzierte Teststrategie. Entwicklungs-Branches können isoliert getestet werden, ohne den Hauptbranch zu beeinträchtigen. Änderungen werden erst dann in den Hauptbranch integriert, wenn sie validiert sind, was die Stabilität der Software erhöht.

In einem weiteren Aspekt ist ein Computerprogramm mit Programmcode beansprucht, um zumindest Teile des vorliegenden Verfahrens in einem seiner Aspekte auszuführen, wenn das Computerprogramm auf einem Computer ausgeführt wird. Mit anderen Worten wird ein Computerprogramm(-produkt), umfassend Befehle, die bei der Ausführung des Programms durch einen Computer diesen veranlassen, das Verfahren/die Schritte des Verfahrens in einem seiner Aspekte auszuführen.

In einem weiteren Aspekt ist ein computerlesbarer Datenträger mit Programmcode eines Computerprogramms vorgeschlagen, um zumindest Teile des vorliegenden Verfahrens in einem seiner Aspekte auszuführen, wenn das Computerprogramm auf einem Computer ausgeführt wird. Mit anderen Worten betrifft die Erfindung ein computerlesbares (Speicher-) Medium, umfassend Befehle, die bei der Ausführung durch einen Computer diesen veranlassen, das Verfahren/die Schritte des Verfahrens in einem seiner Aspekte auszuführen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein schematisches Flussdiagramm eines Ausführungsbeispiels des beanspruchten Verfahrens zum Betreiben eines Testsystems zum Testen und/oder Validieren einer automatisierten Steuerungsfunktion eines Fahrzeugs oder eines mit dem Fahrzeug verbundenen Geräts; und
- Fig. 2: eine beispielhafte Veranschaulichung des beanspruchten Testsystems zum Testen und/oder Validieren einer automatisierten Steuerungsfunktion eines Fahrzeugs oder eines mit dem Fahrzeug verbundenen Geräts.

### Ausführliche Beschreibung der Ausführungsformen

In den Figuren der Zeichnungen bezeichnen gleiche Bezugszeichen gleiche oder funktionsgleiche Elemente, Bauteile oder Komponenten, soweit nichts Gegenteiliges angegeben ist.

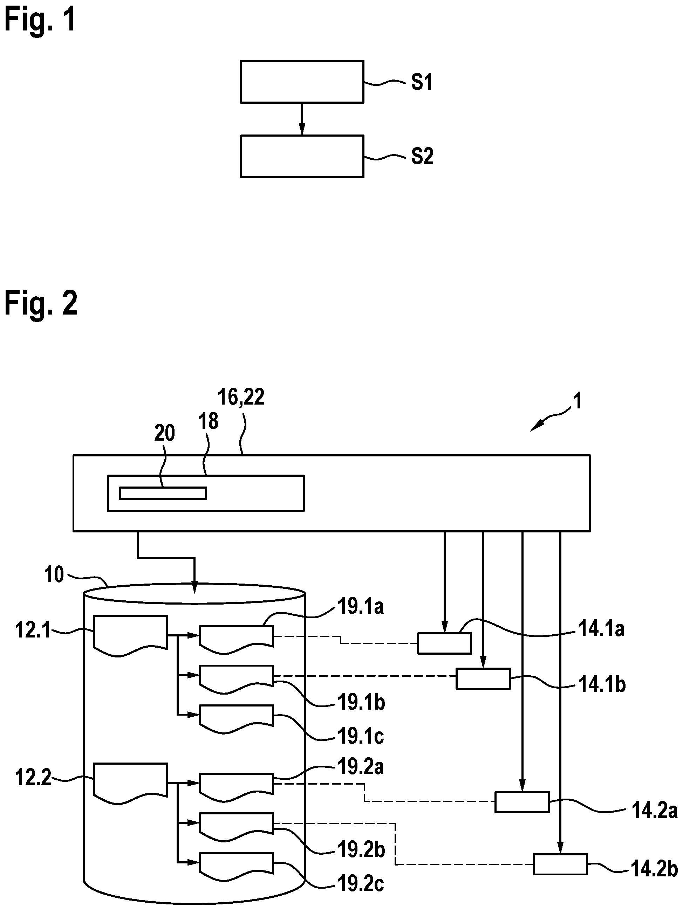

Fig. 1 zeigt ein computer-implementiertes Verfahren zum Betreiben eines Testsystems 1 zum Testen und/oder Validieren einer automatisierten Steuerungsfunktion eines Fahrzeugs oder eines mit dem Fahrzeug verbundenen Geräts. Die nachfolgend genannten Bezugszeichen verweisen zum Teil auf in Fig. 2 gezeigte Elemente des entsprechenden Systems.

Das Verfahren umfasst ein Bereitstellen S1 eines, insbesondere externen, Datenspeichers 10, in welchem eine Anzahl von Testkonfigurationen 12.1, 12.2 eines virtuellen Tests 14.1a, 14.1b, 14.2a, 14.2b zum Testen und/oder Validieren der automatisierten Steuerungsfunktion des Fahrzeugs oder des mit dem Fahrzeug verbundenen Geräts speicherbar ist; und Überwachen S2 des Datenspeichers 10 durch einen Dienst 16, welcher bei Detektieren einer Erstellung, Änderung oder Löschung zumindest einer Testkonfiguration 12.1, 12.2 in dem Datenspeicher 10 eine Erstellung, Änderung oder Löschung des, der in dem Datenspeicher 10 gespeicherten Testkonfiguration 12.1, 12.2 entsprechenden virtuellen Tests 14.1a, 14.1b, 14.2a, 14.2b zum Testen und/oder Validieren der automatisierten Steuerungsfunktion des Fahrzeugs oder des mit dem Fahrzeug verbundenen Geräts in dem Testsystem 1 durchführt.

Der Dienst 16 ist Teil des Testsystems 1 zum Testen und/oder Validieren der automatisierten Fahrfunktion des Kraftfahrzeugs.

Des Weiteren weist der Dienst 16 für jeden virtuellen Test die Testkonfiguration 12.1, 12.2 beschreibende Metadaten 18 auf.

Die Metadaten 18 weisen eine URL des Datenspeichers 10, einen Verzeichnispfad der Testkonfigurationen 12.1, 12.2 und Authentifizierungsdaten eines Erstellers der Testkonfigurationen 12.1, 12.2 auf.

Ferner weisen die Metadaten 18 zumindest einen, einen Branch 19.1a, 19.1b, 19.1c, 19.2a, 19.2b, 19.2c der Testkonfigurationen 12.1, 12.2 bezeichnenden Identifikator 20 auf.

Der zumindest eine Identifikator 20 bezeichnet, insbesondere unter Verwendung eines Platzhalters, eine Mehrzahl von Branches 19.1a, 19.1b, 19.1c, 19.2a, 19.2b, 19.2c der Testkonfigurationen 12.1, 12.2.

Der Dienst 16 selektiert unter Verwendung des zumindest einen Identifikators 20 die zu überwachende Testkonfiguration 12.1, 12.2, wobei basierend auf dem zumindest einen Identifikator 20 festgelegt ist, für welche Branches 19.1a, 19.1b, 19.1c, 19.2a, 19.2b, 19.2c der Testkonfigurationen 12.1, 12.2 der virtuelle Test 14.1a, 14.1b, 14.2a, 14.2b erstellt, geändert oder gelöscht wird.

Wenn im Datenspeicher 10 ein neuer Branch 19.1a, 19.1b, 19.1c, 19.2a, 19.2b, 19.2c der Testkonfigurationen 12.1, 12.2 bereitgestellt wird, welcher dem Identifikator 20 entspricht, wird ein dem Branch 19.1a, 19.1b, 19.1c, 19.2a, 19.2b, 19.2c der Testkonfigurationen 12.1, 12.2 entsprechender virtueller Test 14.1a, 14.1b, 14.2a, 14.2b im Testsystem 1 erstellt.

Wenn im Datenspeicher 10 des Weiteren ein Branch 19.1a, 19.1b, 19.1c, 19.2a, 19.2b, 19.2c der Testkonfigurationen 12.1, 12.2 geändert wird, welcher dem Identifikator 20 entspricht, so wird ein dem Branch 19.1a, 19.1b, 19.1c, 19.2a, 19.2b, 19.2c der Testkonfigurationen 12.1, 12.2 entsprechender virtueller Test 14.1a, 14.1b, 14.2a, 14.2b im Testsystem 1 geändert.

Wenn im Datenspeicher 10 ein Branch 19.1a, 19.1b, 19.1c, 19.2a, 19.2b, 19.2c der Testkonfigurationen 12.1, 12.2 gelöscht wird, welcher dem Identifikator 20 entspricht, wird ein dem Branch 19.1a, 19.1b, 19.1c, 19.2a, 19.2b, 19.2c der Testkonfigurationen 12.1, 12.2 entsprechender virtueller Test 14.1a, 14.1b, 14.2a, 14.2b im Testsystem 1 gelöscht.

Im Falle eines Pull-Requests an den Datenspeicher 10 zum Zusammenführen von Änderungen von einem ersten Branch 19.1a, 19.2a der Testkonfigurationen 12.1, 12.2 in einen zweiten Branch 19.1b, 19.2b der Testkonfigurationen 12.1, 12.2 wird eine Änderung des dem zweiten Branch 19.1b, 19.2b der Testkonfigurationen 12.1, 12.2 entsprechenden virtuellen Test im Testsystem 1 durchgeführt.

Der erste Branch 19.1a, 19.2a der Testkonfigurationen 12.1, 12.2 ist ein Entwicklungs-Branch und der zweite Branch 19.1b, 19.2b der Testkonfigurationen 12.1, 12.2 ist ferner ein Implementierungs-Branch der Testkonfigurationen 12.1, 12.2. Ferner weisen die Testkonfigurationen 12.1, 12.2 jeweils einen dritten Branch 19.1c, 19.2c auf, welcher ein Entwicklungs- oder Implementierungs-Branch sein kann.

Fig. 2 zeigt eine beispielhafte Veranschaulichung des beanspruchten Testsystems 1 zum Testen und/oder Validieren einer automatisierten Steuerungsfunktion eines Fahrzeugs oder eines mit dem Fahrzeug verbundenen Geräts.

Das Testsystem 1 umfasst einen, insbesondere externen, Datenspeicher 10, in welchem eine Anzahl von Testkonfigurationen 12.1, 12.2 eines virtuellen Tests 14.1a, 14.1b, 14.2a, 14.2b zum Testen und/oder Validieren der automatisierten Steuerungsfunktion des Fahrzeugs oder des mit dem Fahrzeug verbundenen Geräts speicherbar ist. Darüber hinaus umfasst das Testsystem 1 eine Überwachungseinrichtung 22, welche konfiguriert ist, durch einen Dienst 16 den Datenspeicher 10 zu überwachen, wobei der Dienst 16 bei Detektieren einer Erstellung, Änderung oder Löschung zumindest einer Testkonfiguration 12.1, 12.2 in dem Datenspeicher 10 konfiguriert ist, eine Erstellung, Änderung oder Löschung des virtuellen Tests 14.1a, 14.1b, 14.2a, 14.2b zum Testen und/oder Validieren der automatisierten Steuerungsfunktion des Fahrzeugs oder des mit dem Fahrzeug verbundenen Geräts in dem Testsystem 1 durchzuführen.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken.

Beispielsweise kann eine Reihenfolge der Verfahrensschritte abgeändert werden. Das Verfahren kann ferner zumindest abschnittsweise sequentiell oder parallel durchgeführt werden.

### Bezugszeichenliste

- 1: Testsystem
- 10: Datenspeicher
- 12.1, 12.2: Testkonfiguration
- 14.1a, 14.1b, 14.2a, 14.2b: virtueller Test
- 16: Dienst
- 18: Metadaten
- 19.1a, 19.1b, 19.2a, 19.2b: Branches
- 19.1a, 19.2a: erster Branch
- 19.1b, 19.2b: zweiter Branch
- 20: Identifikator
- 22: Überwachungseinrichtung
- S1-S2: Verfahrensschritte

## Patentansprüche

1. Computer-implementiertes Verfahren zum Betreiben eines Testsystems (1) zum Testen und/oder Validieren einer automatisierten Steuerungsfunktion eines Fahrzeugs oder eines mit dem Fahrzeug verbundenen Geräts, mit den Schritten:
Bereitstellen (S1) eines, insbesondere externen,
Datenspeichers (10), in welchem eine Anzahl von Testkonfigurationen (12.1, 12.2) eines virtuellen Tests (14.1a, 14.1b, 14.2a, 14.2b) zum Testen und/oder Validieren der automatisierten Steuerungsfunktion des Fahrzeugs oder des mit dem Fahrzeug verbundenen Geräts speicherbar ist; und
Überwachen (S2) des Datenspeichers (10) durch einen Dienst (16), welcher bei Detektieren einer Erstellung, Änderung oder Löschung zumindest einer Testkonfiguration (12.1, 12.2) in dem Datenspeicher (10) eine Erstellung, Änderung oder Löschung des, der in dem Datenspeicher (10) gespeicherten Testkonfiguration (12.1, 12.2) entsprechenden virtuellen Tests (14.1a, 14.1b, 14.2a, 14.2b) zum Testen und/oder Validieren der automatisierten Steuerungsfunktion des Fahrzeugs oder des mit dem Fahrzeug verbundenen Geräts in dem Testsystem (1) durchführt.

2. Computer-implementiertes Verfahren nach Anspruch 1, wobei der Dienst (16) Teil des Testsystems (1) zum Testen und/oder Validieren der automatisierten Fahrfunktion des Kraftfahrzeugs ist.

3. Computer-implementiertes Verfahren nach Anspruch 1 oder 2, wobei der Dienst (16) für jeden virtuellen Test die Testkonfiguration (12.1, 12.2) beschreibende Metadaten (18) aufweist.

4. Computer-implementiertes Verfahren nach Anspruch 3, wobei die Metadaten (18) eine URL des Datenspeichers (10), einen Verzeichnispfad der Testkonfiguration (12.1, 12.2) und Authentifizierungsdaten eines Erstellers der Testkonfiguration (12.1, 12.2) aufweist.

5. Computer-implementiertes Verfahren nach Anspruch 3 oder 4, wobei die Metadaten (18) zumindest einen, einen Branch (19.1a, 19.1b, 19.2a, 19.2b) der Testkonfiguration (12.1, 12.2) bezeichnenden Identifikator (20) aufweisen.

6. Computer-implementiertes Verfahren nach Anspruch 5, wobei der zumindest eine Identifikator (20), insbesondere unter Verwendung eines Platzhalters, eine Mehrzahl von Branches (19.1a, 19.1b, 19.2a, 19.2b) der Testkonfiguration (12.1, 12.2) bezeichnet.

7. Computer-implementiertes Verfahren nach Anspruch 5 oder 6, wobei der Dienst (16) unter Verwendung des zumindest einen Identifikators (20) die zu überwachende Testkonfiguration (12.1, 12.2) selektiert, wobei basierend auf dem zumindest einen Identifikator (20) festgelegt ist, für welche Branches (19.1a, 19.1b, 19.2a, 19.2b) der Testkonfiguration
der virtuelle Test (14.1a, 14.1b, 14.2a, 14.2b) erstellt, geändert oder gelöscht wird.

8. Computer-implementiertes Verfahren nach einem der Ansprüche 5 bis 7, wobei wenn im Datenspeicher (10) ein neuer Branch (19.1a, 19.1b, 19.2a, 19.2b) der Testkonfiguration (12.1, 12.2) bereitgestellt wird, welcher dem Identifikator (20) entspricht, ein dem Branch (19.1a, 19.1b, 19.2a, 19.2b) der Testkonfiguration (12.1, 12.2) entsprechender virtueller Test (14.1a, 14.1b, 14.2a, 14.2b) im Testsystem (1) erstellt wird.

9. Computer-implementiertes Verfahren nach einem der Ansprüche 5 bis 8, wobei wenn im Datenspeicher (10) ein Branch (19.1a, 19.1b, 19.2a, 19.2b) der Testkonfiguration (12.1, 12.2) geändert wird, welcher dem Identifikator (20) entspricht, ein dem Branch (19.1a, 19.1b, 19.2a, 19.2b) der Testkonfiguration (12.1, 12.2) entsprechender virtueller Test (14.1a, 14.1b, 14.2a, 14.2b) im Testsystem (1) geändert wird.

10. Computer-implementiertes Verfahren nach einem der Ansprüche 5 bis 9, wobei wenn im Datenspeicher (10) ein Branch (19.1a, 19.1b, 19.2a, 19.2b) der Testkonfiguration (12.1, 12.2) gelöscht wird, welcher dem Identifikator (20) entspricht, ein dem Branch (19.1a, 19.1b, 19.2a, 19.2b) der Testkonfiguration (12.1, 12.2) entsprechender virtueller Test (14.1a, 14.1b, 14.2a, 14.2b) im Testsystem (1) gelöscht wird.

11. Computer-implementiertes Verfahren nach einem der Ansprüche 5 bis 10, wobei im Falle eines Pull-Requests an den Datenspeicher (10) zum Zusammenführen von Änderungen von einem ersten Branch (19.1a, 19.2a) der Testkonfiguration (12.1, 12.2) in einen zweiten Branch (19.1b, 19.2b) der Testkonfiguration (12.1, 12.2) eine Änderung des dem zweiten Branch (19.1b, 19.2b) der Testkonfiguration (12.1, 12.2) entsprechenden virtuellen Test im Testsystem (1) durchgeführt wird.

12. Computer-implementiertes Verfahren nach Anspruch 11, wobei der erste Branch (19.1a, 19.2a) der Testkonfiguration (12.1, 12.2) ein Entwicklungs-Branch und der zweite Branch (19.1b, 19.2b) der Testkonfiguration (12.1, 12.2) ein Implementierungs-Branch der Testkonfiguration (12.1, 12.2) ist.

13. Testsystem (1) zum Testen und/oder Validieren einer automatisierten Steuerungsfunktion eines Fahrzeugs oder eines mit dem Fahrzeug verbundenen Geräts, umfassend:
einen, insbesondere externen, Datenspeicher (10), in welchem eine Anzahl von Testkonfigurationen (12.1, 12.2) eines virtuellen Tests (14.1a, 14.1b, 14.2a, 14.2b) zum Testen und/oder Validieren der automatisierten Steuerungsfunktion des Fahrzeugs oder des mit dem Fahrzeug verbundenen Geräts speicherbar ist; und
eine Überwachungseinrichtung (22), welche konfiguriert ist, durch einen Dienst (16) den Datenspeicher (10) zu überwachen, wobei der Dienst (16) bei Detektieren einer Erstellung, Änderung oder Löschung zumindest einer Testkonfiguration (12.1, 12.2) in dem Datenspeicher (10) konfiguriert ist, eine Erstellung, Änderung oder Löschung des virtuellen Tests (14.1a, 14.1b, 14.2a, 14.2b) zum Testen und/oder Validieren der automatisierten Steuerungsfunktion des Fahrzeugs oder des mit dem Fahrzeug verbundenen Geräts in dem Testsystem (1) durchzuführen.

14. Computerprogrammprodukt mit einem Computerprogramm, das Softwaremittel zur Durchführung eines Verfahrens nach einem der Ansprüche 1 bis 12 umfasst, wobei das Computerprogramm auf einem Computer ausgeführt wird.

15. Computerlesbarer Datenträger mit Programmcode eines Computerprogramms, um zumindest Teile eines Verfahrens nach einem der Ansprüche 1 bis 12 auszuführen, wenn das Computerprogramm auf einem Computer ausgeführt wird.
